# EUROPEAN PATENT SPECIFICATION

(11) **EP 3 573 816 B1**
(45) Date of publication and mention of the grant of the patent: **16.10.2024**
(21) Application number: 18744873.3
(22) Date of filing: 24.01.2018
(51) Int. Cl.: B29C 64/314, B29B 7/90, B29C 64/295, B33Y 70/00, B29K 77/00, C08J 3/14

(54) **MULTI JET FUSION THREE DIMENSIONAL PRINTING USING NYLON 5**
DREIDIMENSIONALEN MEHRSTRAHLFUSIONSDRUCKEN UNTER VERWENDUNG VON NYLON 5
IMPRESSION TRIDIMENSIONNELLE PAR FUSION À JETS MULTIPLES UTILISANT DU NYLON 5

(30) Priority: 24.01.2017 US 201762449956 P
(43) Date of publication of application: 04.12.2019
(73) Proprietor: Jabil Inc., St. Petersburg, Florida 33716 (US)
(72) Inventor: RODGERS, Luke, St. Petersburg, Florida 33716 (US); GJOVIK, Erik, St. Petersburg, Florida 33716 (US)
(74) Representative: Gulde & Partner
(86) International application number: PCT/US2018/014968
(87) International publication number: WO 2018/140443

(56) References cited:
- WO-A1-2015/165361
- WO-A2-2018/075530
- CN-A- 105 038 212
- CN-A- 105 542 200
- CN-A- 106 121 996
- US-A- 5 932 687
- US-A1- 2004 106 691
- US-A1- 2006 071 359

## Description

### BACKGROUND

### Field of the Disclosure

The present disclosure relates to materials and methods of making same for additive manufacturing, and, more particularly, to pulverulent nylon 5 for use in additive manufacturing applications.

### Description of the Background

Additive manufacturing, commonly known as three-dimensional printing (3D-printing), constitutes a significant advance in the development of not only printing technologies, but also of product development, prototyping, and experimental capabilities. Capabilities of 3D-printing include forming physical objects of virtually any geometry. By way of non-limiting example, gears, sprockets, toys, models, prototypes, and countless other physical objects can now be built using a 3D printer.

Typically, an object to be built is first created as a 3D digitally-modeled image. Using common computer-aided design (CAD) software, the modeled image is virtually created. After that, the object model is virtually "sliced" into thin layers, which ultimately comprise instructions of how the model will be physically built by the 3D printer. This virtual "slicing" is needed because conventional methods of 3D-printing involve a print head that successively deposits material in thin layers according to the geometry of the modeled image based on the printing instructions for each layer. The physical object is then produced by depositing successive layers of material one on top of another, according to the layer-instructions, from bottom to top. The print head is capable of depositing the heated material while moving in multiple linear directions, while the base moves in three-dimensions. The print head continues depositing the material until the top, or last, layer of the object is reached and the object is thus fully formed.

Numerous methods of powder based 3D-printing have been developed. Selective laser sintering (SLS) is a 3D-printing technique that uses a laser to fuse powder material on successive layers based on the geometry of the 3D model. High speed sintering (HSS) and Multi jet fusion (MJF) 3D-printing employ multiple jets that similarly deposit successive layers of IR absorbing ink onto powder material, followed by exposure to IR energy for selective melting of the powder layer. Electrophotography 3D-printing employs a rotating photoconductor that builds the object layer-by-layer from the base.

SLS, MJF, and HSS 3D-printing share the same type of free floating, non-fixed, powder bed used for the production of the object. They share the same material requirements for compatibility with the printing process since the free body diagram of the additively built object will have the same stresses applied, only with different heating mechanisms to obtain the melt phase. The free body diagram of a 3D printed object can be used to determine the residual stresses expected in the object. This is necessary for successfully building the object. If the residual stress is too high, the object will deform into the printing region and be displaced in the part bed by the printing processes such as the powder deposition blade or roller.

The prior art identifies many ways to address residual stresses. In general, to obtain the lowest amount of residual stress in a free floating powder bed, both the modulus and the volumetric change of the molten phase should be suitably low. This is so the selectively molten areas do not induce large enough residual stresses into the object that it leaves a build plane. The most common process for addressing residual stresses for these powder bed-based 3D printers, is to use a polymer with a sufficiently large operating window between its melting temperature and its recrystallization temperature. Therefore, keeping the molten region, a low modulus, and uncrystallized, so to not induce a large strain until the entire part is built. Unfortunately, few polymers have a broad enough window between the two aforementioned phase transitionals to allow the SLS and MJF process to build the object with a low enough residual stress.

Thus, when choosing 3D-printing materials the breadth of the operating window is a significant process parameter. Physical characteristics of a suitable polymer include a melting temperature that is higher than its recrystallization temperature, and a suitability for effective localized melting.

Specifically, the operating window should be such that the selectively melted polymer exhibits a modulus that is low enough to not create problematic residual stresses in the printed object while cooling to the part bed temperature. And at the part bed temperature, no formation of crystallites should be observed. Specifically, the window should be such that the polymer effectively melts at a low enough modulus that it does not induce residual stress on the printed object during cooling. If achieved, there is no substantive volumetric change through the recrystallization of the polymer in the object, until the entire object is built. If the operating window of the polymer is too small, a build-up of stresses occurs, in part, because the polymer shrinks during the build.

It is, therefore, the gap size between the melting point and the recrystallization temperature of the polymer that forms a suitable operational window to better allow for polymer printing in SLS, HSS, and MJF 3D-printing systems. To expand the range of available usable materials in these printing systems, the physical properties of the polymers, and processes that may change their physical properties and expand the operating windows, must be considered.

Polymers such as thermoplastic elastomers (TPE) may exhibit a low enough modulus, that operating outside of the typical operating window does not result in the failure of a part build, but rather higher than desired porosity. That said, having a higher melting point, larger and or more crystallites, and a lower recrystallization temperature are still desired. This is because a higher melting point will enable a higher part bed temperature, create larger and/or more crystallites that prevent unwanted part growth in the part bed (defined as when the powder near the selectively melted polymer also melts), and lower the recrystallization temperature. Other known polymer materials used in 3D-printing applications include Nylon (polyamide) 6, Nylon 6, 6, Nylon 11, Nylon 12, and Nylon 6, 10. US 2004/0106691 A1 relates to a laser sinter powder containing a polyamide, such as nylon-12, and metal particles. Further, a process for producing the powder, and moldings produced by selective laser sintering of the powder are disclosed. US 5,932,687 A provides a process for preparing precipitated polyamide powders of highly uniform particle size and low porosity.

### SUMMARY

The disclosed exemplary apparatuses, systems, and methods provide powder nylon 5 having a suitable operating window for use in SLS, MJF, HSS, and electrophotography 3D-printing applications. An embodiment of the disclosure may provide a precipitated pulverulent nylon 5 formed through precipitating the nylon 5 in a solvent, allowing the polymer to form crystallites, and then employing the precipitated pulverulent nylon 5 in a powder-based 3D-printing process.

The present invention provides a process of making pulverulent nylon 5 for additive manufacturing as defined in claim 1.

The process for making the pulverulent nylon 5 may further comprise: the nylon 5 being selected from the group consisting of nylon 5,6, nylon 5,10; nylon 5, 11, nylon 5,12, nylon 5, 13 and nylon 5, 14; adding at least one compatible filler to the nylon 5, wherein the fillers are either organic or inorganic; the at least one filler being selected from the group consisting of glass, metal, or ceramic particles, pigments, titanium dioxid particles, and carbon black particles; particle size of the at least one filler being about equal to or less than particle sizes of the nylon 5; the particle sizes of the at least one filler does not vary more than about 15-20 percent of an average particle size of the nylon 5; the at least one filler is less than about 3% by weight of the nylon 5; a flow agent being incorporated into the powdered nylon 5; the flow agent being selected from at least one of a fumed silicas, calcium silicates, alumina, amorphous alumina, magnesium silicates, glassy silicas, hydrated silicas, kaolin, attapulgite, glassy phosphates, glassy borates, glassy oxides, titania, talc, pigments, and mica; the flow agent having a particle size of about 10 microns or less; the flow agent does not significantly alter the glass transition temperature of the nylon 5; the flow agent is present in an amount less than about 5% by weight of nylon 5.

### BRIEF DESCRIPTION OF THE DRAWINGS

The exemplary apparatuses, systems, and methods shall be described hereinafter with reference to the attached drawing which is given as a non-limiting example only, in which:

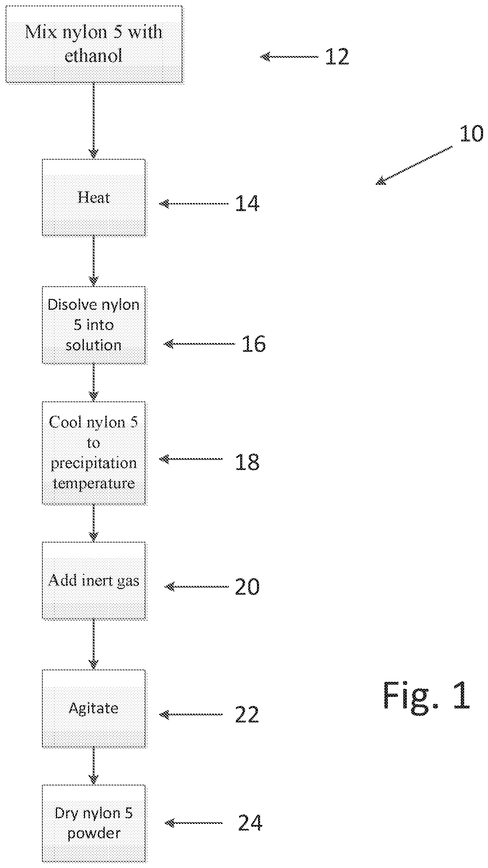

Fig. 1 is a simplified flow chart depicting an illustrative method of making pulverulent nylon 5.

### DETAILED DESCRIPTION

The present disclosure includes the use of nylon 5 ("polyamide-5", "PA-5") in additive manufacturing applications. Polyamides from this group include nylon 5,6, nylon 5,10, nylon 5,11, nylon 5,12, nylon 5,13, and nylon 5,14. It will be appreciated by the skilled artisan, in light of the discussion herein, that nylon 5,6, nylon 5,10, nylon 5,11, nylon 5,12, nylon 5,13, and nylon 5,14 may be collectively referred to herein as nylon 5 unless identified otherwise. It is believed that nylon 5 may not be a natural choice by the skilled artisan for additive manufacturing purposes, particularly multi jet fusion additive manufacturing applications, because it is relatively expensive, has lower moisture resistance, and is more prone to stress cracking. It is also different from common additive manufacturing polyamides including PA-6, PA-12, etc. because nylon 5 is a biobased polymer.

That said, nylon 5 does include characteristics that may be useful in additive manufacturing including significantly slower recrystallization kinetics, compared to standard nylons. This is believed due to the shorter segment length of the 5 carbon chain. This irregularity slows the crystallization process when compared to 6, 6 polymers and the like. Nylon 5 is also organic and environmentally friendly. It is contemplated in the present disclosure that a commercial embodiment of filament nylon 5 is available under the trade name Terryl, by Cathay Industrial Biotech. It is appreciated, however, that nylon 5 obtainable from other sources is included within the scope of this disclosure as well.

Pulverulent nylon 5 may be obtained through polycondensation of diamines with dicarboxylic acids that result in a powder. The monomers for the dicarboxylic may be selected from the group consisting of adipic acid, azelaic acid, sevacic acid, dodecanedioic acid, drassylic acid, tetradecanedioic acid, tentadecanodioic acid, and octadecanedioic acid. Having the operating window as described herein allows the nylon 5 to recrystallize slow enough not to produce any substantial internal stresses.

For purposes of this disclosure, an "increased operating window" includes the characteristics of at least one of a wider than typical range between and among the melting and recrystallization temperatures, a larger enthalpy upon melting, and lower volumetric change during recrystallization of the nylon 5. It is believed nylon 5 possesses increased operating window characteristics, such as for enhanced use in SLS, MJF, HSS, and possibly electrophotography 3D-printing applications. Physical characteristics of suitable precipitated pulverulent nylon 5 includes a melting temperature that is higher than its recrystallization temperature, and melting characteristics suitable for effective localized melting. These characteristics allow for an operating window that keeps the rest of the material unmelted, such as even in the presence of a laser or IR heater used during 3D-printing in solid form. The unmelted solid material can then act as a supporting structure for the molten nylon 5.

For purposes of this disclosure, an increased operating window includes the characteristics of at least one of a wider range between the melting and recrystallization temperatures, a larger enthalpy upon melting, and low volumetric change during recrystallization. By using powder nylon 5, it is believed the particles may soften at lower temperatures but do not fuse together until exposed directly to the heat source, such as the laser. Typical powder bed temperatures will be about 10-15 degrees C lower than the peak melting temperature, with the powder feed bed temperature about 5 degrees above the recrystallization temperature. It is further believed the nylon 5 is less likely to suffer thermal degradation during the printing process, among other advantages.

Powder-based 3D-printing includes a part bed and feed bed. This part bed is generally at a steady temperature before it is subjected to an energy source. That energy source is raised until a fusion temperature is reached. The pulverulent nylon 5 may be placed on a feed bed at a start temperature. During operation additional nylon 5 is placed on top of the original nylon 5 which cools and needs to be raised again. It is believed that only the portion of nylon 5 that is directly subjected to energy will be melted and not the surrounding nylon 5.

It is appreciated that various fillers or additives may be added to a nylon 5 powder. Such fillers may include glass, metal, or ceramic particles. Colorants such as pigments, titanium dioxide, or carbon black particles may be blended with the nylon 5 powder. In an embodiment, the particle size of the filler should be about equal to or less than the particle sizes of the nylon 5. In an embodiment, such particles should not vary more than about 15-20 percent of the average particle size of the nylon 5 powder particles. Such fillers or additives should be less than about 3% by weight of the nylon power by weight.

Further, it will be understood to the skilled artisan, in light of this discussion of the embodiments herein, that flow agents and fillers may be incorporated into, and/or into the disclosed methodologies to produce, the disclosed precipitated pulverulent nylon 5. Illustratively the flow agent may include one or more: fumed silicas, calcium silicates, alumina, amorphous alumina, magnesium silicates, glassy silicas, hydrated silicas, kaolin, attapulgite, glassy phosphates, glassy borates, glassy oxides, titania, talc, pigments, or mica. The particle size of these flow agents may be about 10 microns or less. Additionally, they are included only to the extent they enhance the flow of the polymer material. In an illustrative embodiment, the flow agent may be blended with the pulverulent precipitated nylon 5. It is appreciated that the amount of flow agent used should not significantly alter the Tg of the nylon 5. Illustratively, the flow agent will be present in an amount less than 5% by weight of the composition. Another flow agent may include metal soaps, such as alkali metal or alkaline earth metal salts of the underlying alkane monocarboxylic acids or dimer acids. These metal soaps may be incorporated into the nylon 5 powder.

It is further contemplated that blends of one or more of the above polymers may be included within the scope of this disclosure. Illustratively, blends of different nylon 5's may be created to achieve alternate desired properties. Flow agents and fillers can also be added to affect the polymer's properties.

An illustrative method of making the powder form of nylon 5 indicated by reference numeral 10, is generally outlined in Fig. 1 includes mixing the nylon 5 in a solvent in a closed container at 12. The amount of solvent is at least twice the amount by weight of the nylon 5. The temperature is raised to between 130 degrees Celsius to 150 degrees Celsius as indicated at 14. Nylon 5 dissolves and forms a solution with the ethanol at 16. The solution is then cooled to a precipitation temperature of the nylon 5 to between 100 degrees Celsius and 125 degrees Celsius at 18. Once the precipitation temperature is reached that temperature is maintained. An inert atmosphere in the container is applied and the solution agitated to precipitate the nylon 5 in powder form from the solution at 20. During agitation at 22 the solution and particles can be further cooled with the ethanol separating from the nylon 5 powder. The nylon 5 powder is separated from the ethanol and then removed from the container. The nylon 5 may then be dried at reduced pressure by heating the container to about 100 degrees Celsius at 24. The nylon 5 may be further dried by raising the temperature to about 150 degrees and agitating the composition.

Another illustrative method of producing the nylon 5 powder includes adding nylon 5 and ethanol to a container. The ethanol is as much as twice to five times by weight the amount of the nylon 5. The composition is then heated to a dissolution temperature of 130 to 150 degrees Celsius. In this embodiment, the composition is stirred until dissolution of the nylon 5. After dissolution, the solution is cooled to precipitation temperature of the nylon 5 between 100 degrees Celsius to 125 degrees Celsius. It is appreciated that this temperature may be in-part affected by the size of the container. It is further appreciated this may also be done by either distilling the ethanol or by reflux cooling. At the precipitation temperature the nylon 5 begins precipitating from the ethanol. During this process an inert gas such as nitrogen is introduced into the reactor. It is appreciated that other inert gases may alternatively be used in this step. Also, the composition may continue to be stirred. This may create a suspension which is then dried. During the drying process, the composition may be dried at about 100 degrees Celsius. The drying may result in powders having a particle size of about 40 to 200 microns. It is appreciated that the powder may be subject to screening or milling to obtain the desired particle size for a particular application. The powder may also be subjected to a heat treatment for the purpose of further crystallizing the polymer.

It is believed that such powdered version of nylon 5 may have a substantial difference between its melting point and recrystallization point. There may also be higher enthalpy of fusion which reduces the amount of heat diffusion through surrounding particles not directly subjected to the IR laser heating from the 3D printing process.

Further, methods of making powdered nylon 5 may include adding nylon 5 in a container with ethanol denatured with 2-butanone (1% water content). While stirring, the temperature may be raised to about 145 degrees Celsius for about 5 hours. The composition may then be reduced to about 125 degrees Celsius while continuing to stir. The ethanol may then be removed through distillation. The temperature is reduced to about 110 degrees Celsius during continued distillation. A suspension of the composition may be created and the temperature is lowered again to about 45 degrees Celsius. The suspension may then be dried with the remaining ethanol removed via distillation.

It is appreciated that the rotation rate of the stirrer, precipitation temperature, and time can be modified to potentially affect the particle size of the resulting nylon 5 powder. It is also appreciated that the powder may be reprecipitated.

It is appreciated that the nylon 5 may also be mixed in different ratios and particle sizes. This may have the effect of changing or controlling the properties of the resulting pulverulent powdered nylon 5. It is further contemplated that the nylon 5 may be developed in powdered form through other methods of chemical precipitation.

Particle-size distribution may be determined by laser scattering. Melting point and enthalpy may be determined through DSC. Powder flow may be measured using Method A of VIN EN ISO 6186. Modulus of elasticity and tensile strength maybe determined pursuant the DIN/EN/ISO 527 standard.

Another illustrative method of making the powder from nylon 5 may include evaporation limited coalescence and anti-solvent precipitation.

## Claims

1. A process of making pulverulent nylon 5 for additive manufacturing comprising:
dissolving the nylon 5 in ethanol in a container;
wherein an amount of ethanol is twice to five times an amount by weight of the nylon 5;
raising a temperature in the container to between 130 degrees Celsius and 150 degrees Celsius;
forming a solution of nylon 5 with the ethanol;
cooling the solution to a precipitation temperature of the nylon 5 to between 100 degrees Celsius and 125 degrees Celsius;
applying an inert atmosphere in the container;
agitating the solution;
precipitating the nylon 5 from the solution;
removing the nylon 5 powder from the container; and
drying the nylon 5 by heating to 100 degrees Celsius to 150 degrees Celsius.

2. The process for making the pulverulent nylon 5 of Claim 1, wherein the nylon 5 is selected from the group consisting of nylon 5,6, 5,10, 5,11, 5,12, 5,13, and 5,14.

3. The process for making the pulverulent nylon 5 of Claim 1, further comprising the step of adding at least one compatible filler to the nylon 5, wherein the at least one filler is selected from the group consisting of glass, metal, or ceramic particles, pigments, titanium dioxid particles, and carbon black particles.

4. The process for making the pulverulent nylon 5 of Claim 3, wherein particle size of the at least one filler is equal to or less than particle sizes of the nylon 5.

5. The process for making the pulverulent nylon 5 of Claim 4, wherein the particle sizes of the at least one filler does not vary more than 15-20 percent of an average particle size of the nylon 5.

6. The process for making the pulverulent nylon 5 of Claim 3, wherein the at least one filler is less than 3% by weight of the nylon 5.

7. The process for making the pulverulent nylon 5 of Claim 1, wherein a flow agent is incorporated into the powdered nylon 5, wherein the flow agent is selected from at least one of a fumed silicas, calcium silicates, alumina, amorphous alumina, magnesium silicates, glassy silicas, hydrated silicas, kaolin, attapulgite, glassy phosphates, glassy borates, glassy oxides, titania, talc, pigments, and mica.

8. The process for making the pulverulent nylon 5 of Claim 7, wherein the flow agent is present in an amount less than 5% by weight of nylon 5.

9. Pulverulent nylon 5 for additive manufacturing obtained by the process of claim 1.

10. Use of the pulverulent nylon 5 of claim 9 for additive manufacturing, in particular for use in Selective laser sintering, Multi jet fusion, High speed sintering, and electrophotography 3D-printing applications.

## Patentansprüche

1. Verfahren zum Herstellen von pulverförmigem Nylon 5 für die additive Fertigung, umfassend:
Auflösen des Nylon 5 in Ethanol in einem Behälter;
wobei eine Ethanolmenge das Zwei- bis Fünffache einer Gewichtsmenge des Nylon 5 beträgt;
Erhöhen einer Temperatur in dem Behälter auf zwischen 130 Grad Celsius und 150 Grad Celsius;
Ausbilden einer Lösung aus Nylon 5 mit dem Ethanol;
Abkühlen der Lösung auf eine Ausfälltemperatur des Nylon 5 zwischen 100 Grad Celsius und 125 Grad Celsius;
Erzeugen einer inerten Atmosphäre in dem Behälter;
Rühren der Lösung;
Ausfällen des Nylon 5 aus der Lösung;
Entnehmen des Nylon-5-Pulvers aus dem Behälter und
Trocknen des Nylon 5 durch Erhitzen auf 100 Grad Celsius bis 150 Grad Celsius.

2. Verfahren zum Herstellen des pulverförmigen Nylon 5 nach Anspruch 1, wobei das Nylon 5 aus der Gruppe ausgewählt ist, die aus Nylon 5,6, 5,10, 5,11, 5,12, 5,13 und 5,14 besteht.

3. Verfahren zum Herstellen des pulverförmigen Nylon 5 nach Anspruch 1, das ferner den Schritt des Zugebens mindestens eines kompatiblen Füllstoffs zu dem Nylon 5 umfasst, wobei der mindestens eine Füllstoff aus der Gruppe ausgewählt ist, die aus Glas-, Metall-, oder Keramikpartikeln, Pigmenten, Titandioxidpartikeln und Rußpartikeln besteht.

4. Verfahren zum Herstellen des pulverförmigen Nylon 5 nach Anspruch 3, wobei die Partikelgröße des mindestens einen Füllstoffs gleich den Partikelgrößen des Nylon 5 oder kleiner ist.

5. Verfahren zum Herstellen des pulverförmigen Nylon 5 nach Anspruch 4, wobei die Partikelgrößen des mindestens einen Füllstoffs nicht um mehr als 15 - 20 Prozent einer durchschnittlichen Partikelgröße des Nylon 5 variieren.

6. Verfahren zum Herstellen des pulverförmigen Nylon 5 nach Anspruch 3, wobei der mindestens eine Füllstoff weniger als 3 Gew.-% des Nylon 5 ausmacht.

7. Verfahren zum Herstellen des pulverförmigen Nylon 5 nach Anspruch 1, wobei in das pulverisierte Nylon 5 ein Fließmittel eingebracht wird, wobei das Fließmittel aus mindestens einem aus pyrogenen Siliciumdioxiden, Calciumsilicaten, Aluminiumoxid, amorphem Aluminiumoxid, Magnesiumsilicaten, glasartigen Siliciumdioxiden, hydratisierten Siliciumdioxiden, Kaolin, Attapulgit, glasartigen Phosphaten, glasartigen Boraten, glasartigen Oxiden, Titandioxid, Talkum, Pigmenten und Glimmer ausgewählt ist.

8. Verfahren zum Herstellen des pulverförmigen Nylon 5 nach Anspruch 7, wobei das Fließmittel in einer Menge von weniger als 5 Gew.-% des Nylon 5 vorhanden ist.

9. Pulverförmiges Nylon 5 für die additive Fertigung, das durch das Verfahren nach Anspruch 1 erhalten wird.

10. Verwendung des pulverförmigen Nylon 5 nach Anspruch 9 für die additive Fertigung, insbesondere zur Verwendung für selektives Lasersintern, Mehrstrahlfusion, Hochgeschwindigkeitssintern und 3D-Elektrophotographie-Druckanwendungen.

## Revendications

1. Procédé de fabrication de nylon 5 pulvérulent pour la fabrication additive, comprenant :
la dissolution du nylon 5 dans éthanol dans un récipient ;
dans lequel une quantité d'éthanol est de deux à cinq fois supérieure au poids du nylon 5 ;
l'augmentation d'une température dans le récipient jusqu'à 130 à 150 degrés Celsius ;
la formation d'une solution de nylon 5 avec l'éthanol ;
le refroidissement de la solution à une température de précipitation du nylon 5 comprise entre 100 degrés Celsius et 125 degrés Celsius ;
l'application d'une atmosphère inerte dans le récipient ;
l'agitation de la solution ;
la précipitation du nylon 5 à partir de la solution ;
l'extraction de la poudre de nylon 5 du récipient ; et
le séchage du nylon 5 par chauffage à entre 100 et 150 degrés Celsius.

2. Procédé de fabrication du nylon 5 pulvérulent selon la revendication 1, dans lequel le nylon 5 est choisi dans le groupe constitué de nylon 5,6, 5,10, 5,11, 5,12, 5,13 et 5,14.

3. Procédé de fabrication du nylon 5 pulvérulent selon la revendication 1, comprenant en outre l'étape d'ajout d'au moins une charge compatible au nylon 5, dans lequel ladite au moins une charge est choisie dans le groupe constitué de particules de verre, de métal ou de céramique, de pigments, de particules de dioxyde de titane et de particules de noir de carbone.

4. Procédé de fabrication du nylon 5 pulvérulent selon la revendication 3, dans lequel la taille des particules de ladite au moins une charge est égale ou inférieure à la taille des particules du nylon 5.

5. Procédé de fabrication du nylon 5 pulvérulent selon la revendication 4, dans lequel las tailles des particules de ladite au moins une charge ne varie pas de plus de 15 à 20 % de une taille moyenne des particules du nylon 5.

6. Procédé de fabrication du nylon 5 pulvérulent selon la revendication 3, dans lequel ladite au moins une charge représente moins de 3 % en poids du nylon 5.

7. Procédé de fabrication du nylon 5 pulvérulent selon la revendication 1, dans lequel un agent d'écoulement est incorporé au nylon 5 en poudre, l'agent d'écoulement étant choisi parmi au moins un des éléments suivants : silices pyrogénées, silicates de calcium, alumine, alumine amorphe, silicates de magnésium, silices vitreuses, silices hydratées, kaolin, attapulgite, phosphates vitreux, borates vitreux, oxydes vitreux, titane, talc, pigments et mica.

8. Procédé de fabrication du nylon 5 pulvérulent selon la revendication 7, dans lequel l'agent d'écoulement est présent dans une quantité inférieure à 5 % en poids de nylon 5.

9. Nylon 5 pulvérulent pour fabrication additive obtenu par le procédé selon la revendication 1.

10. Utilisation du nylon 5 pulvérulent selon la revendication 9 pour la fabrication additive, en particulier pour des applications de frittage sélectif au laser, de fusion multijet, de frittage à grande vitesse et d'impression 3D par électrophotographie.
